# EUROPEAN PATENT SPECIFICATION

(11) **EP 2 760 979 B1**
(45) Date of publication and mention of the grant of the patent: **09.12.2015**
(21) Application number: 12773100.8
(22) Date of filing: 25.09.2012
(51) Int. Cl.: C10L 5/36, C10L 7/02, C10L 11/04

(54) **SOLID FIRELIGHTERS**
FESTSTOFF-FEUERANZÜNDER
ALLUME-FEUX

(30) Priority: 29.09.2011 GB 201116762
(43) Date of publication of application: 06.08.2014
(73) Proprietor: Standards Brands (UK) Limited, Cleeve Road Leatherhead Surrey KT22 7SD (GB)
(72) Inventor: BARFORD, Rick, Leatherhead Surrey KT22 6SD (GB)
(74) Representative: Swan, Elizabeth Mary
(86) International application number: PCT/GB2012/052362
(87) International publication number: WO 2013/045904

(56) References cited:
- WO-A2-2008/056153
- US-A- 3 801 292
- US-A- 4 083 697
- US-A- 4 293 313

## Description

### Field of the Invention

This invention relates to solid firelighters often generically known as "white firelighters" of the type which may be used to initiate combustion of the primary fuel in barbecues [BBQs] or domestic wood or coal fires. Firelighters can be used irrespective of whether the primary fuel is in the form of charcoal (lump wood or briquettes), natural wood as used in outdoor wood fires or coal as used in domestic indoor fires.

### Background to the Invention

So called 'white' firelighters are well known, having been available for decades, and are supplied in the form of a scored 'board' or as individual pre-formed units. Such firelighters comprise a solidified emulsion consisting of a closed cell matrix of a polymerised urea-formaldehyde [UF] resin containing a combustible material. The combustible material is generally a liquid hydrocarbon or similar, at levels of approximately 80% by weight of the total firelighter. The UF resin matrix is formed in-situ through acid catalysis to promote polymerization of an aqueous urea-formaldehyde resin around the hydrocarbon liquid and thus form the 'solid' firelighter.

In use, the firelighters are applied either below or dispersed among the primary fuel, for example pieces of BBQ or domestic fireplace fuel. Once lit by the simple application of a lighted match or similar flame, the firelighters burn with a hot flame and, importantly, burn for sufficient time to ensure the complete and full ignition of the primary fuel.

For many years the formulations for these urea formaldehyde resin-based firelighters have been based on the use of readily burnable hydrocarbons such as, for example, kerosenes, iso-paraffins, n-paraffins and diesel at levels of approximately 80% by weight of the total firelighter. This allows for the formation of a stable oil-in-water emulsion so that the subsequent acid-catalysed polymerisation of the resin occurs in a controlled manner without splitting, separation, inversion or other de-stabilisation of the emulsion.

However, there is now an ever-increasing pressure on industry to identify ways of providing a reduction in use of highly refined hydrocarbon-based fuels, so decreasing the level of hydrocarbon from the approximately 80% by weight of the firelighter that is currently used would be highly desirable. This is due to the reducing availability of highly refined hydrocarbons such as kerosene, with consequent continual rise in costs and also, importantly, to the desire to find a more environmentally-responsible approach.

It has long been an aim of the researchers in this field to reduce the hydrocarbon content of a firelighter without reducing the performance. In particular, it is important not to reduce the firelighter burn time, so as to ensure full ignition of the primary fuel can take place.

By way of background, it is well known by those skilled in the art that UF-based kerosene firelighters cannot be easily reformulated by simply reducing the hydrocarbon content, without the resulting increase in proportion of the other components, namely water and urea, significantly reducing the ability of the firelighter initially to ignite or to sustain a burn of sufficient length of time to ensure primary fuel ignition. Urea in particular is an ignition-impairing material due to its nitrogen content and is used extensively in formulating fire-retardant products. Water is obviously also ignition-impairing.

WO2008/056153 describes the inclusion in a firelighter of comminuted lignite, optionally together with peat. This can be used as a partial substitute for liquid hydrocarbon in white firelighters. However, it has been found that lignite particles tend to cause de-stabilisation of the liquid emulsion, in quantities of just 2 to 4% by weight of the firelighter. If lignite is granulated it can be tolerated in slightly higher quantities, but still causes destabilisation when added in amounts of more than around 10%. In addition, since lignite is carbon-based, substituting kerosene with lignite does not actually reduce the carbon-footprint of the firelighter.

WO2008/056153 also describes the use of inert 'fillers' such as silicon dioxide and aluminium oxide in minor amounts, preferably below 5% by weight of the total firelighter. It is generally understood that amounts of inert filler above around 5% by weight compromise the emulsion stability and interfere with resin polymerization. This occurs because the simple substitution of hydrocarbon with combustible or non-combustible solid powdered fillers generally causes de-stabilisation of the hydrocarbon/aqueous UF resin liquid emulsion. The emulsion separates into its two constituent phases and/or the filler reacts with the UF resin in such a way as to prevent subsequent polymerisation, thus preventing the mix from setting into a solid form.

It is an object of the present invention to provide a firelighter having a reduced concentration of expensive, highly refined hydrocarbon, below the traditional 80% by weight of the firelighter, that maintains acceptable performance, particularly burn time.

### Summary of the Invention

According to a first aspect, the present invention provides a firelighter comprising a solidified emulsion of a liquid hydrocarbon encapsulated in polymerised aqueous resin, wherein the liquid hydrocarbon is present in an amount of 30 to 75% by weight of the firelighter, and wherein the firelighter also contains starch.

According to a second aspect, the present invention provides a method of making a firelighter according to the first aspect of the invention, the method comprising the steps of: forming an emulsion of a liquid hydrocarbon in an aqueous resin, wherein the emulsion additionally comprises starch; and polymerising the aqueous resin so that it encapsulates the liquid hydrocarbon in a solidified emulsion to form a firelighter, wherein the firelighter comprises 30 to 75% by weight liquid hydrocarbon.

According to a third aspect, the present invention provides use of a firelighter according to the first aspect of the invention, to initiate combustion of the primary fuel in a barbecue, domestic wood fire or domestic coal fire.

Surprisingly it has been found that part of the liquid hydrocarbon content of a traditional firelighter can be replaced with starch, without incurring the expected reduction in performance. When starch is included in the firelighter, the level of hydrocarbon can be reduced to between 30 and 75%, which is well below the level traditionally used. In particular, the burn time of the firelighter remains very good, which is important to ignite the primary fuel, the amount of heat transferred to the primary fuel is surprisingly high, and the firelighter ignites easily. Without wishing to be bound to theory, this is thought to be due to the fact that during combustion the starch not only contributes energy though burning and so compensates to a large degree for the lower liquid hydrocarbon content, but that the mode of burning of starch itself makes the combustion less aggressive, and consequently more efficient. In detail, on combustion the starch firstly converts into a 'char'. This forms a partial barrier to and hence slows the migration of the liquid hydrocarbon to the firelighter surface where it is burnt off. This is thought to be how similar burn times can be obtained from a firelighter with a lower hydrocarbon content. In addition, by reducing the initial aggressiveness of the firelighter flame, the char ensures that the majority of the heat released occurs in the body of the primary fuel to be ignited, rather than above the fuel bed. Heat is often released above the primary fuel bed, and hence wasted, with traditional firelighters, which do not contain starch. This can be observed as flames which extend above the primary fuel.

Surprisingly starch, unlike lignite and the inert filler as commonly understood, does not react with and de-stabilise the resin/hydrocarbon liquid emulsion, or interfere with the acid-catalysed reaction needed to set the emulsion into a solid. Therefore, it is possible to include starch higher levels than is possible with other fillers, without granulating the starch, and hence replace more of the hydrocarbon, than has been possible in the past. In this way in the invention it is possible to use 30 to 75% hydrocarbon.

Since starch is essentially a renewable product, firelighters according to the present invention help to address the environmental and economic concerns surrounding the use of highly refined hydrocarbons. In particular, starch is much less expensive than liquid hydrocarbons, so firelighters according to the invention are more cost effective than traditional firelighters. With regard to the environmental impact, the substitution of hydrocarbon with starch significantly reduces the net carbon footprint of the firelighter, and allows a non-renewable product to be replaced with a renewable product, which is highly desirable.

It has been found that firelighters according to the invention are safe to use and, when ignited, burn steadily without flaring, sudden deflagration, spitting, dripping or explosion.

In firelighters according to the present invention, the concentration of hydrocarbon is preferably from 40 to 65% by weight of the firelighter. Starch is preferably added in an amount of 1% or more by weight of the firelighter, preferably in an amount of 5% or more by weight of the firelighter. Surprising, the concentration of the starch can be up to 50% by weight of the firelighter without causing destabilisation of the emulsion, and is preferably 10 to 40% by weight, more preferably 15 to 30% by weight. The concentration of the aqueous resin is from 10 to 30% by weight, preferably 12 to 25% by weight of the firelighter.

### Detailed Description of the Invention

Starch is a polysaccharide comprising glucose monomers joined in α 1,4 linkages. The basic chemical formula of the starch molecule is (C₆H₁₀O₅)ₙ. The simplest form of starch is the linear polymer amylose; amylopectin is the branched form.

Starch is manufactured in the green leaves of plants from excess glucose produced during photosynthesis and serves the plant as a reserve food supply. Starch is stored in chloroplasts in the form of granules and in such organs as the roots of the tapioca plant; the tuber of the potato; the stem pith of sago; and the seeds of corn, wheat, and rice.

So-called "pure" starch can be used in the invention and is usually presented as a soft, white, tasteless powder that is insoluble in cold water, alcohol, or other solvents. Preferably the starch is pure starch.

Most commercial starch is made from corn, although wheat, tapioca, and potato starch are also used. Commercial starch is usually obtained by crushing or grinding starch-containing tubers or seeds and then mixing the pulp with water. The resulting paste is freed of its remaining impurities and then dried. Aside from their basic nutritional uses, starches are used in brewing, food production, paper manufacturing and in the textile industry.

Any starch can be used, such as, for example, whaet startch Amyzet 200 as supplied by Sylval NV, Aalst, Belgium.

Although reduced compared to traditional firelighters, a liquid hydrocarbon still constitutes a significant proportion of a firelighter according to the invention. Any hydrocarbon that is suitable for this purpose can be used including kerosenes, iso-paraffins, n-paraffins and diesel. Kerosene is most preferred.

In the present invention the firelighter comprises a "solidified emulsion", in particular a solidified emulsion of a liquid hydrocarbon encapsulated in polymerised aqueous resin. By the term solidified emulsion we mean an emulsion of two liquids that has solidified, in this case through polymerisation. During manufacture of the firelighters an oil-in-water emulsion is formed of the liquid hydrocarbon in an aqueous resin. The aqueous resin can be any suitable chemical, such as a melamine formaldehyde, but is usually urea formaldehyde. The resin needs to be thermosetting, rather than thermoplastic, so that the produce maintains its integrity once it has been lit.

The aqueous resin is a mixture of the resin solids in water, usually with 20 to 60% resin in 80 to 40% water. Often a mixture of 40% resin solids with 60% water is used. As an example, "Dynea Ireland" supply a suitable urea formaldehyde under the trade name "Prefere 87 1640HD".

Once the emulsion has formed, the aqueous resin is polymerised through the addition of acid which acts as a catalyst. Any suitable acid can be used which can lower the pH to below around 3. Hydrochloric acid is most commonly used, for example as a 1 molar solution. This causes the resin to polymerise around, and encapsulate the liquid hydrocarbon in a matrix, to form the solidified emulsion. The emulsion is poured into a mould just before addition of the acid, and so solidifies in the mould. The mould is usually the form of a scored board, which individual firelighters can be broken off from, but the firelighter can also be formed as individual units.

Firelighters according to the present invention may be manufactured by processes similar to those used to produce traditional firelighters with 80% by weight kerosene or other hydrocarbon or fatty esters. To the emulsion of hydrocarbon and aqueous resin is added starch powder or granules as described above, in quantities up to 40%, preferably 10 to 40% by weight. The starch is added in a controlled manner using, for example, a regular screw type volumetric powder feeder and then the emulsion is mixed to form a homogenous mix. Although the starch adds body to the mix, the rheology is affected less than expected, with for example 30% by weight levels of starch not changing the ability to a) easily pump the mix as before, b) add acid catalyst and c) subsequently mix and pour into moulds for polymerisation and solidification to take place.

### Examples

An embodiment of the invention will now be described by way of example.

69 parts by weight of a regular production firelighter emulsion was made. This comprised 80% kerosene and 20% by weight of aqueous urea formaldehyde resin, which itself is made up of 40% solids urea formaldehyde resin in water.

To this was added 30 parts by weight of wheat starch and the mixture was mixed until homogeneous. To this mix was added 1 part of 1 molar hydrochloric acid. The mix was mixed rapidly and within seconds poured into moulds to set. After setting, the moulded blocks produced were scored, sealed into polyester packs to prevent evaporative loss and allowed to equilibrate for 24 hours.

A duplicate control test was run alongside with no starch added. This contained 99 parts regular production firelighter emulsion made using 80% kerosene and 20% by weight of aqueous urea formaldehyde resin, which itself is made up of 40% solids urea formaldehyde resin in water. 1 part of 1 molar hydrochloric acid was added in the same manner was as for the starch firelighter.

After 24 hours, individual firelighters were snapped off the blocks along the scorelines and checked for weight equality between test and control lighters, then tested for burn times and general heat release via a modified calorimeter test - [heat capture versus time test].

### Results:

Burn time : 30% starch firelighter gave 105% the burn time when compared to the findings for the control lighter without starch.

Modified calorimeter [heat captured] : 30% starch firelighter gave 106% the heat capture value compared to the findings for the control without starch.

It is believed that the longer burn time and higher heat capture value is due to a more controlled, lower flame produced with the starch firelighter, compared to the control firelighter. This ensures that the heat produced is more efficiently transferred into the modified calorimieter, as less is lost to the ambient atmosphere than with the more aggressive flame burn displayed by the control.

## Claims

1. A firelighter comprising a solidified emulsion of a liquid hydrocarbon encapsulated in polymerised aqueous resin, wherein the liquid hydrocarbon is present in an amount of 30 to 75% by weight of the firelighter, and wherein the firelighter also contains starch in an amount of up to 40% by weight of the firelighter.

2. A firelighter according to claim 1, in which the concentration of liquid hydrocarbon is from 40 to 65% by weight of the firelighter.

3. A firelighter according to claim 1 or 2, in which the starch is added in an amount of 1% or more by weight of the firelighter, preferably in an amount of 5% or more by weight of the firelighter.

4. A firelighter according to any preceding claim, in which the starch is added in an amount of 10 to 40% by weight, more preferably 15 to 30% by weight.

5. A firelighter according to any preceding claim, in which the concentration of the aqueous resin is from 10 to 30% by weight, preferably 12 to 25% by weight of the firelighter.

6. A method of making a firelighter according to any preceding claim, the method comprising the steps of:
forming an emulsion of a liquid hydrocarbon in an aqueous resin, wherein the emulsion additionally comprises starch in an amount of up to 40% by weight of the firelighter; and
polymerising the aqueous resin with an acid catalyst to generate a solidified emulsion to form a firelighter, wherein the firelighter comprises 30 to 75% by weight liquid hydrocarbon.

7. The use of a firelighter according to any of claims 1 to 5, to initiate combustion of the primary fuel in a barbecue, domestic wood fire or domestic coal fire.

## Patentansprüche

1. Feueranzünder, umfassend eine verfestigte Emulsion eines flüssigen Kohlenwasserstoffs, der in ein polymerisiertes wässriges Harz eingekapselt ist, wobei der flüssige Kohlenwasserstoff in einer Menge von 30 bis 75 % des Gewichts des Feueranzünders vorhanden ist und wobei der Feueranzünder zudem Stärke in einer Menge von bis zu 40 % des Gewichts des Feueranzünders enthält.

2. Feueranzünder nach Anspruch 1, bei dem die Konzentration des flüssigen Kohlenwasserstoffs von 40 bis 65 % des Gewichts des Feueranzünders beträgt.

3. Feueranzünder nach Anspruch 1 oder 2, bei dem die Stärke in einer Menge von 1 % oder mehr des Gewichts des Feueranzünders, vorzugsweise in einer Menge von 5 % oder mehr des Gewichts des Feueranzünders beträgt.

4. Feueranzünder nach einem der vorherigen Ansprüche, bei dem die Stärke in einer Menge von 10 bis 40 % des Gewichts, vorzugsweise 15 bis 30 % des Gewichts zugegeben ist.

5. Feueranzünder nach einem der vorherigen Ansprüche, bei dem die Konzentration des wässrigen Harzes von 10 bis 30 % des Gewichts, vorzugsweise 12 bis 25 % des Gewichts des Feueranzünders beträgt.

6. Verfahren zur Herstellung eines Feueranzünders nach einem der vorherigen Ansprüche, wobei das Verfahren die folgenden Schritte aufweist:
Formen einer Emulsion eines flüssigen Kohlenwasserstoffs in einem wässrigen Harz, wobei die Emulsion zudem Stärke in einer Menge von bis zu 40 % des Gewichts des Feueranzünders enthält, und
Polymerisieren des wässrigen Harzes mit einem Säurekatalysator, um eine verfestigte Emulsion zu erzeugen, um einen Feueranzünder zu bilden, wobei der Feueranzünder 30 bis 75 % des Gewichts flüssigen Kohlenwasserstoff umfasst.

7. Verwendung eines Feueranzünders nach einem der Ansprüche 1 bis 5, um eine Verbrennung des Primärbrennstoffs bei einem Barbecue, einem heimischen Holzfeuer oder einem heimischen Kohlefeuer einzuleiten.

## Revendications

1. Allume-feu comprenant une émulsion solidifiée d'un hydrocarbure liquide encapsulé dans une résine aqueuse polymérisée, dans lequel l'hydrocarbure liquide est présent en une quantité de 30 à 75 % en poids de l'allume-feu, et dans lequel l'allume-feu contient également de l'amidon en une quantité allant jusqu'à 40 % en poids de l'allume-feu.

2. Allume-feu selon la revendication 1, dans lequel la concentration en hydrocarbure liquide est de 40 à 65 % en poids de l'allume-feu.

3. Allume-feu selon la revendication 1 ou 2, dans lequel l'amidon est ajouté en une quantité supérieure ou égale à 1 % en poids de l'allume-feu, de préférence en une quantité supérieure ou égale à 5 % en poids de l'allume-feu.

4. Allume-feu selon l'une quelconque des revendications précédentes, dans lequel l'amidon est ajouté en une quantité de 10 à 40 % en poids, plus préférablement de 15 à 30 % en poids.

5. Allume-feu selon l'une quelconque des revendications précédentes, dans lequel la concentration en résine aqueuse est de 10 à 30 % en poids, de préférence de 12 à 25 % en poids de l'allume-feu.

6. Procédé de préparation d'un allume-feu selon l'une quelconque des revendications précédentes, le procédé comprenant les étapes de :
formation d'une émulsion d'un hydrocarbure liquide dans une résine aqueuse, l'émulsion comprenant en outre de l'amidon en une quantité allant jusqu'à 40 % en poids de l'allume-feu ; et
polymérisation de la résine aqueuse par catalyse acide pour produire une émulsion solidifiée afin de former un allume-feu, l'allume-feu comprenant de 30 à 75 % en poids d'hydrocarbure liquide.

7. Utilisation d'un allume-feu selon l'une quelconque des revendications 1 à 5, pour initier la combustion du combustible primaire dans un barbecue, un feu de bois domestique ou un feu de charbon domestique.
